# EUROPÄISCHE PATENTSCHRIFT

(11) **EP 0 415 265 B1**
(45) Veröffentlichungstag und Bekanntmachung des Hinweises auf die Patenterteilung: **10.11.1993**
(21) Anmeldenummer: 90116151.3
(22) Anmeldetag: 23.08.1990
(51) Int. Cl.: B65D 85/20

(54) **Vorrichtung zur Lagerung und zum Transport von Rohren**
Device for storage and transport of tubes
Appareil pour le stockage et le transport de tubes

(30) Priorität: 26.08.1989 DE 3928320
(43) Veröffentlichungstag der Anmeldung: 06.03.1991
(73) Patentinhaber: Drilltec Patents & Technologies Company, Inc., Houston, Texas 77043 (US)
(72) Erfinder: Koch, Robert, D-3110 Uelzen (Gross Liedern) (DE)
(74) Vertreter: König, Norbert, Dipl.-Phys. Dr.

(56) Entgegenhaltungen:
- EP-A- 0 071 163
- US-A- 4 385 695
- SOVIET INVENTIONS ILLUSTRATED, Sektion Mechanik, Woche 8813, Zusammensetzung Nr. 090609, Q34, 31. März 1988, Derwent Publications Ltd., London GB, &SU-A-1333619

## Beschreibung

Die Erfindung betrifft eine Vorrichtung zur Lagerung und zum Transport von Rohren gemäß Oberbegriff des Anspruchs 1.

Durch die Veröffentlichung (Prospekt) der Firma Sigma-Chemie Inc., Houston, USA, sind zwei Rahmen für Rohre bekannt, die äußere (untere und obere) sowie mittlere mit Ausnehmungen für Rohre versehene Rahmenteile aufweisen. Bei dem einen Rahmen werden relativ dünne Stahlprofile verwendet, die mit Stahl/Gummi-Kissen für Rohre versehen sind und die mit Hilfe mehrerer Schraubbolzen, die zwischen Kissen hindurchgeführt werden müssen, zusammengehalten werden. Bei dem anderen Rahmen werden profilierte Rahmenteile verwendet, die seitlich mit Steckverbindungen ausgestattet sind und die mit Hilfe eines um die Rahmenteile und das Rohrbündel herumgeführten Stahl- oder Kunststoffbandes zusammengehalten werden. Die profilierten Rahmenteile bestehen aus einer Stahl/Gummiverbindung. Beide Rahmen verwenden relativ viele Bauteile und komplizierte Ausgestaltungen, so daß die Herstellungskosten groß sind. Die Variabilität ist sehr gering.

Das DE-GM 79 08 756 betrifft eine zusammensetzbare Vorrichtung zum Stapeln von Rohren in waagerechten und übereinanderliegenden Schichten. Die Vorrichtung weist einen Rahmen auf, der aus einem Grundträger, seitlichen U-förmigen Rungen und einem oberen Querträger besteht. Die Grundträger sind mit seitlichen Wangen und oberseitigen beabstandeten Anschlägen versehen, zwischen denen die Rungen sitzen. Steckbolzen sichern die Rungen in ihrer Einbaulage am Grundträger, wozu in den Wangen und in den Rungen miteinander fluchtende Bohrungen vorgesehen sind. Hierdurch werden die Rungen in senkrechter Lage auf dem Grundträger fixiert. Auf ganz ähnliche Weise sind die Rungen mit dem oberen Querträger verbunden, indem die Rungen und der Querträger miteinander fluchtende Bohrungen aufweisen, durch die Steckbolzen gesteckt werden. Mehrere übereinandegeschichtete Rohrlagen werden durh Querlatten voneinander getrennt, wenn die Rohre Muffen oder andere vorstehende Teile aufweisen. Dieser Rahmen besteht ebenfalls aus relativ vielen Einzelteilen, so daß dessen Handhabung mühsam und zeitaufwendig ist und die Herstellungskosten groß sind.

Die EP-A 0 071 163 und die DE-A-3 128 840 zeigen einen Rahmen zum Transport und zur Lagerung von Rohren mit mehreren übereinander angeordneten Profilrahmenteilen, von denen die jeweils oberen und unteren Profilrahmenteile miteinander durch Stangen verbindbar sind, die durch Ausnehmungen der Profilrahmenteile hindurchführbar sind. Die Profilrahmenteile sind Kastenprofile. Jede Stange ist mit einem mit einem Querstück versehenen Ende mit je einem Schenkel in je eine von zwei Querbohrungen des Kastenprofils einsteckbar und in den Querbohrungen schwenkbar ausgebildet. Sie sind beim Nachobenschwenken in die Arretierung in Richtung des Querstückes ausgelegte Ausnehmung einschwenkbar. Der Rahmen ist mit inneren vertikalen längsverlaufenden Versteifungswänden versehen, die endseitig je eine nach außen offene Aussparung aufweisen. Bei diesem bekannten Rahmen werden zwar weniger Bauteile verwendet, so daß die Montage und Demontage einfacher und schneller durchführbar sind. Die Rahmenteile sind jedoch noch relativ kompliziert aufgebaut, so daß der Herstellungsaufwand noch relativ groß ist.

Aus der US-A-4 385 695 sind Verpackungsblöcke für zylindrische Gegenstände bekannt. Die Verpackungsblöcke bestehen aus zwei L-förmigen Teilen, die mit Hilfe von Nut- und Federausbildungen zusammensteckbar sind. Ferner weisen die L-förmigen Teile außenseitige Bohrungen zur Aufnahme von Stiften auf, um mehrere Verpackungsblöcke neben- und übereinander ausgerichtet stapeln zu können.

Die Aufgabe der vorliegenden Erfindung besteht deshalb darin, eine Vorrichtung zur Lagerung und zum Transport von Rohren der eingangs genannten Art so auszubilden, daß die Herstellungskosten verringert werden können und die Vorrichtung variabler einsetzbar ist.

Diese Aufgabe wird durch die Ausbildung gemäß Kennzeichen des Anspruchs 1 gelöst.

Die erfindungsgemäße Vorrichtung verwendet für jedes Rohrauflager eine Leiste oder ein Hohlprofil zur Aufnahme eines einstückigen Formstückes oder von mehreren Formstück-Teilen, d. h. daß die Vorrichtung zur Lagerung und zum Transport von Rohren im Prinzip aus nur zwei unterschiedlichen Bauteilen zusammensetzbar ist. Die Leisten oder Hohlprofile können leicht auf die gewünschte Länge zugeschnitten und mit einem entsprechend langen Formstück oder mit der gewünschten Anzahl von Formstück-Teilen versehen werden, so daß ein sehr variabler Einsatz möglich ist. Die Formstücke oder Formstück-Teile und die Leisten oder Hohlprofile sind für sich einfach herstellbar, so daß insgesamt die Fertigungskosten gering gehalten werden können. Da somit die Rohrauflage im wesentlichen nur aus zwei unterschiedlichen Bauteilen zusammensetzbar ist, ergibt sich auch hinsichtlich der Lagerhaltung ein recht geringer Aufwand.

Vorteilhafte und zweckmäßige Weiterbildungen der erfindungsgemäßen Aufgabenlösung sind in den Unteransprüchen gekennzeichnet.

Die Rohrauflage-Formstücke sind aus Kunststoff nach den üblichen preiswerten Hersellungsverfahren gefertigt. Die Leisten bzw. Hohlprofile, auf die die Formstücke aufgeformt oder aufgesteckt werden, sind preiswerte Stahlprofile.

Die Erfindung soll nachfolgend anhand der beigefügten Zeichnung näher erläutert werden.

Es zeigt
- Fig. 1: eine erste Ausführungsform eines Rohrauflagers eines Formstück-Teiles und eines Hohlprofils der Vorrichtung zur Lagerung und zum Transport von Rohren,
- Fig. 2 und 3: mehrere zu einem Rohrauflagerpaket zusammengefaßte Rohrauflager, wobei in der Fig. 2 eine erste Ausführungsform und in der Fig. 3 eine zweite Ausführungsform zum Zusammenhalten des Pakets gezeigt ist,
- Fig. 4 und 5: zwei weitere Ausführungsformen von Hohlprofilen des Rohrauflagers,
- Fig. 6: eine zweite Ausführungsform eines Formstück-Teiles,
- Fig. 7: eine dritte Ausführungsform von Rohrauflagern und einer Vorrichtung zum Zusammenhalten eines Rohrauflagerpaketes,
- Fig. 8: ein Rohrauflager der Ausführungsform nach Fig. 7 in größerer Darstellung und
- Fig. 9 und 10: weitere Ausführungsformen von Rohrauflagern.

Zur Vereinfachung der Beschreibung sind in den Figuren der Zeichnung gleiche Bauteile mit den gleichen Bezugszeichen versehen.

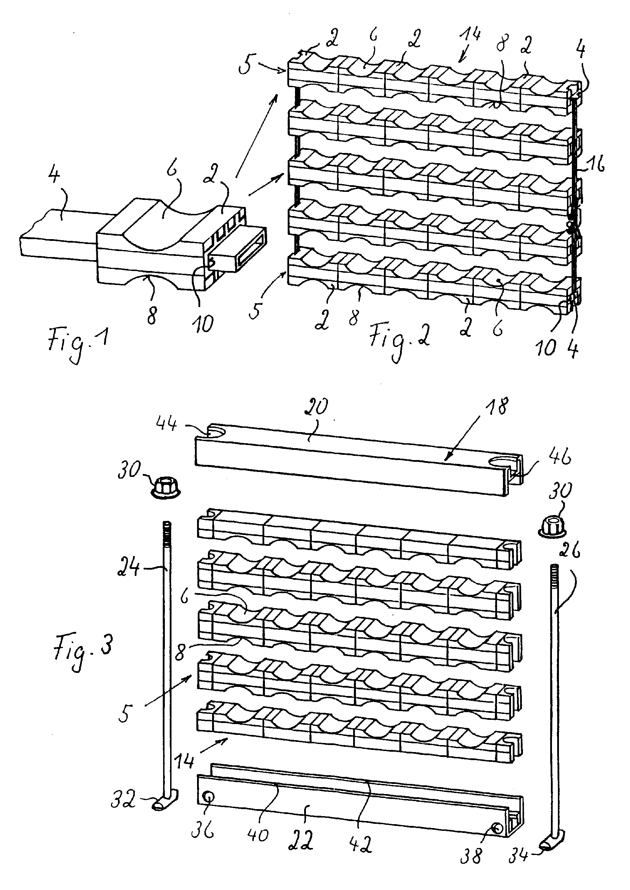

Die Fig. 1 zeigt die Grundelemente einer Vorrichtung zum Lagern und zum Transport von Rohren. Diese Grundelemente sind einzelne Rohrauflager-Formstück-Teile 2 und Kastenprofile 4, auf die ein oder mehrere kurze Formstück-Teile 2 aufsteckbar sind zur Bildung eines Rohrauflagers 5.

Jedes Formstück weist auf seiner oberen und unteren Seite jeweils eine teilzylindrische Ausnehmung 6, 8 für zu lagernde Rohre und einen zentralen, zwischen den Ausnehmungen hindurchgehenden, quer zur Ausnehmung verlaufenden Rechteckkanal 10 auf, mit dem das Formstück-Teil 2 auf das Kastenprofil 4, hier in Form eines Rechteckrohres, aufgesteckt bzw. aufgeschoben ist. Je nach der Länge des Rechteckrohres 4 können mehrere Formstück-Teile 2 aufgeschoben werden.

Das Formstück-Teil 2 ist ein Kunststofformteil und das Rechteckrohr 4 ein Stahlprofil.

Es können mehrere Rohrauflager 5 mit jeweils mehreren Formstück-Teilen 2 auf je einem Rechteckrohr 4 zu einem Rohrauflagerpaket 14 senkrecht übereinander gestapelt werden, wie dies in den Fig. 2 und 3 dargestellt ist. Zum Transport werden die Pakete 14 mittels Stahlband oder Nylonband 16 oder mittels Spannrahmen 18 zusammengehalten.

Das Stahl- oder Nylonband 16 wird dabei vorzugsweise durch das obere und das untere Rechteckrohr hindurchgeführt, vgl. Fig. 2. Der Spannrahmen 18 besteht aus einem oberen und einem unteren U-Profil 20, 22, die seitlich mit Hilfe von Gewindestangen 24, 26, die schwenkbar im unteren U-Profil 20 gelagert sind, und Muttern 30 gegeneinander spannbar sind. Zur schwenkbaren Lagerung weisen die Gewindestangen 24, 26 am unteren Ende jeweils ein Querstück 32, 34 auf. Die Querstücke sind in Querbohrungen 36, 38 der Schenkel 40, 42 des unteren U-Profils 22 einführbar. Das obere U-Rohr 20 weist beidendig Vertiefungen 44, 46 zur verdeckten Aufnahme der Muttern 30 auf.

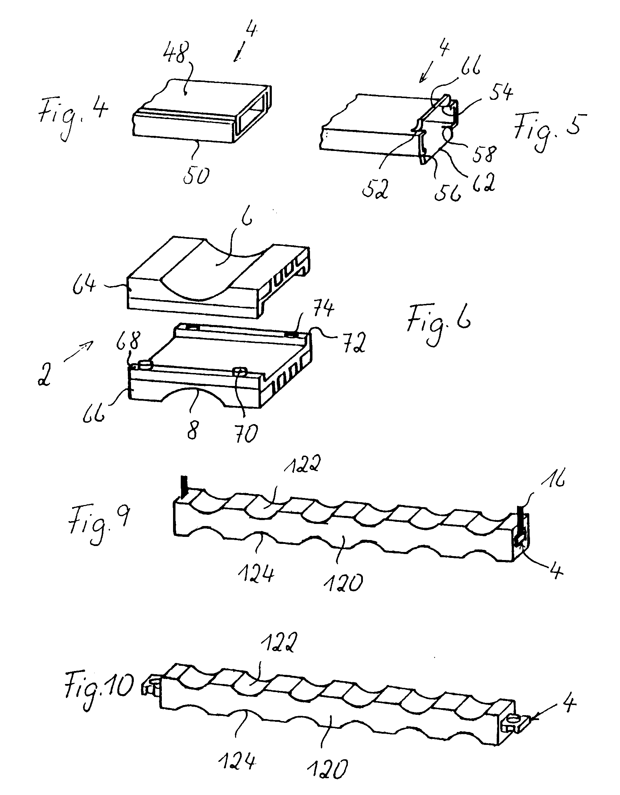

Die Fig. 4 und 5 zeigen zwei weitere Ausführungsformen der Hohlprofile 4. Bei der Ausführungsform nach Fig. 4 wird das Hohlprofil 4 durch zwei identische, zu einem Kastenhohlprofil zusammengesteckte C-Profile 48, 50 gebildet. Das Hohlprofil 4 nach der Fig. 5 ist grundsätzlich wie das Kastenhohlprofil nach Fig. 1 ausgebildet; es unterscheidet sich von dem Kastenhohlprofil nach Fig. 1 nur dadurch, daß das Rechteckrohr 4 endseitig ober- und unterseitig nahe der Längskante kurze Einschnitte 52, 54, 56 und 58 aufweist und daß die zwischen den Einschnitten befindlichen Rohrteile 60, 62 nach oben und unten abgewinkelt sind.

In der Fig. 6 ist eine weitere Ausführungsform eines Rohrauflager-Formstück-Teiles 2 dargestellt. Dieses Formstück-Teil besteht aus einer oberen und unteren zusammensteckbaren, im Querschnitt C-förmigen Formhälfte 64 und 66. Die beiden Formhälften sind identisch ausgebildet. Der eine C-Schenkel 68 weist stirnseitig kurze Vorsprünge 70 und auf dem anderen C-Schenkel 72 komplementär zwischen den Vorsprüngen 70 ausgebildete Sacklöcher 74 auf.

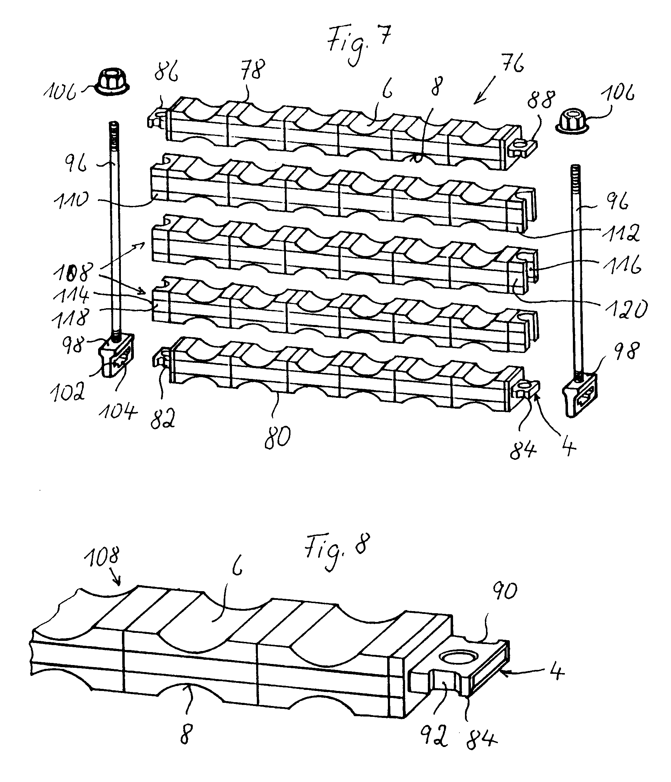

In den Fig. 7 und 8 ist eine weitere Ausführungsform von Rohrauflagern und eine weitere Ausführungsform einer Einrichtung zum Zusammenhalten eines Rohrauflagerstapels dargestellt. Das in einem Rohrauflagerstapel 76 oberste und unterste Rohrauflager weist beidendig mit Teilen 82, 84, 86, 88 aus dem Rohrauflager 78 bzw. 80 herausragende Leisten oder Hohlprofile auf. In diesen Teilen 82, 84, 86, 88 sind jeweils seitliche Einschnürungen 90, 92 und eine mittige senkrechte Bohrung 94 vorgesehen, vgl. insbesondere Fig. 8. Auf die unteren, seitlich überstehenden Teile 82, 84 ist ein mit einem Ende einer Gewindestange 96 verbundenes Formstück 98 mit einer T-förmigen Ausnehmung 100 aufsteckbar. Der T-Balken 102 entspricht in der Breite und Höhe der Breite und Höhe der Leiste oder des Hohlprofiles 4. Der T-Stiel 104 entspricht in der Breite dem Abstand der seitlichen Einschnürungen 90, 92. Das andere Ende der Gewindestange 96 ist durch die senkrechte Bohrung 94 der oberen vorstehenden Teile 86, 88 der Leiste oder des Hohlprofiles 4 hindurchsteckbar. Es kann dann eine Mutter 106 aufgeschraubt werden zum Verspannen der Rohrauflager des Rohrauflagerpaketes. Beim Anziehen der Mutter 106 wird die Gewindestange 96 nebst Formstück 98 nach oben gezogen, bis der T-Stiel 104 der T-förmigen Ausnehmung 100 in die seitlichen Einschnürungen 90, 92 der Teile 82, 84 des Hohlprofiles 4 einrastet. Durch Lösen der Mutter 106 kann die Gewindestange mit Formstück 98 wieder so weit abgesenkt werden, bis sich der T-Balken der T-förmigen Ausnehmung auf die vorstehenden Teile 82 und 84 auflegt; die Formstücke 98 können dann von diesen Teilen heruntergezogen werden.

Die zwischen den oberen und unteren Rohrauflagern 78, 80 angeordneten Rohrauflager 108 können, wie in der Fig. 7 dargestellt, seitlich U-förmige Formstücke 110, 112 aufweisen, die auf mit entsprechenden U-förmigen Ausnehmungen 114, 116 versehenen Endabschnitten 118, 119 der Leisten oder der Hohlprofile 4 angeordnet sind, zur Bildung einer Aufnahme für die Gewindestange 96. Die U-förmigen Formstücke 110, 112 können aber auch an die endständigen Rohrauflager-Formstück-Teile angeformt sein.

Besonders einfach und preiswert gestaltet sich die Herstellung der Rohrauflager 5, wenn dieses aus einem langen, einteiligen Formstück 120 mit mehreren auf zwei gegenüberliegenden Seiten ausgebildeten zylindrischen Ausnehmungen 122, 124 als Auflager für mehrere Rohre besteht, wie dies in den Fig. 9 und 10 dargestellt ist, und dieses Formstück im Spritzgußverfahren auf die Leiste oder das Hohlprofil 4 aufgeformt ist.

## Patentansprüche

1. Vorrichtung zur Lagerung und zum Transport von Rohren mit mehreren übereinander angeordneten Rohrauflagern (5),
- die jeweils ein längliches, einteiliges Formstück (120) mit mehreren auf zwei gegenüberliegenden Seiten ausgebildeten teilzylindrischen Ausnehmungen (122, 124) als Auflager für mehrere Rohre
- oder jeweils mehrere kurze zusammensetzbare Formstück-Teile (2) mit wenigstens einer auf zwei gegenüberliegenden Seiten ausgebildeten teilzylindrischen Ausnehmung (6, 8) als Auflager für die Rohre aufweisen,
- wobei das einteilige Formstück (120) und die Formstück-Teile (2) mit einem zentralen, zwischen den beidersseitigen Ausnehmungen und quer zu den Ausnehmungen verlaufenden, das Formstück oder die Formstück-Teile durchsetzenden Kanal (10) ausgestattet sind
- und mit einer Einrichtung zum Zusammenhalten des Rohrauflagerpaketes (14), das mittels Stahlband oder Nylonband (16) oder mittels Spannrahmen (18) zusammengehalten wird
**dadurch gekennzeichnet,** daß
- eine Leiste oder ein Hohlprofil (4) vorgesehen ist, auf die bzw. auf das das Formstück (120) im Spritzguß verfahren aufgeformt oder das Formstück (120) bzw. die Formstück-Teile (2) mit dem Kanal (10) formschlüssig aufgesteckt ist bzw. sind,
- der Kanal (10) und die Leiste bzw. das Hohlprofil (4) gleiche Querschnittsformen aufweisen, wobei die Innenabmessungen des Kanals etwa den Außenabmessungen der Leiste oder des Hohlprofils entsprechen, und
- das Formstück (120) bzw. die Formstück-Teile (2) Kunststofformteile und die Leiste bzw. das Hohlprofil (4) Stahlprofile sind.

2. Vorrichtung nach Anspruch 1, **dadurch gekennzeichnet,** daß der Kanal einen rechteckförmigen Querschnitt aufweist und das Hohlprofil (4) ein Rechteckrohr ist.

3. Vorrichtung nach Anspruch 1 oder 2, **dadurch gekenn****zeichnet,** daß zum Zusammenhalten mehrerer übereinander angeordneter Rohrauflager (5) ein oder mehrere Stahl- oder Nylonbänder (16) dienen, die durch wenigstens das jeweils oberste und unterste Hohlprofil (4) hindurchgeführt sind.

4. Vorrichtung nach einem der Ansprüche 1 bis 3, **dadurch** **gekennzeichnet,** daß zum Zusammenhalten mehrerer übereinander angeordneter Rohrauflager ein Spannrahmen (18) vorgesehen ist, der zwei U-Profile (20, 22) aufweist, zwischen denen das Rohrauflagepaket (14) angeordnet ist und die mit Hilfe zweier seitlicher, schwenkbar angeordneter Gewindestangen (24, 26) gegeneinander verspannbar sind.

5. Vorrichtung nach Anspruch 1, **dadurch** **gekennzeichnet,** daß das Hohlprofil durch zwei identische, zu einem Kastenhohlprofil zusammengesteckte C-Profile (48, 50) gebildet wird.

6. Vorrichtung nach Anspruch 2, **dadurch gekennzeichnet,** daß das Rechteckrohr endseitig ober- und unterseitig nahe den Längskanten kurze Einschnitte (52, 54, 56, 58) aufweist und daß die zwischen den Einschnitten befindlichen Rohrteile (60, 62) nach oben und unten abgewinkelt sind.

7. Vorrichtung nach Anspruch 1 oder 4, **dadurch gekennzeichnet**, daß die Kurzen Rohrauflager-Formstück-Teile (2) aus oberen und unteren zusammensteckbaren, im Querschnitt C-förmigen Formhälften (64, 66) bestehen.

8. Vorrichtung nach Anspruch 7, **dadurch gekennzeichnet,** daß der eine C-Schenkel (68) der Formhälften stirnseitig kurze Vorsprünge (70) und der andere C-Schenkel (72) komplementär zu den Vorsprüngen ausgebildete Sacklöcher (74) aufweist.

9. Vorrichtung nach Anspruch 7 oder 8, **dadurch gekenn****zeichnet**, daß die Formhälften (64, 66) identisch ausgebildet sind.

10. Vorrichtung nach einem der vorhergehenden Ansprüche, **dadurch gekennzeichnet,**
- daß das im Rohrauflager-Stapel (76) oberste und unterste Rohrauflager (78, 80) beidendig mit Teilen (82, 84, 86, 88) aus dem Rohrauflager herausragende Leisten oder Hohlprofile (4) aufweist,
- daß in den Teilen (82, 84, 86, 88) seitliche Einschnürungen (90, 92) und eine mittige senkrechte Bohrung (94) vorgesehen sind,
- daß auf das untere oder obere Teil (82, 84 oder 86, 88) ein mit einem Ende einer Gewindestange (96) verbundenes Formstück (98) mit einer T-förmigen Ausnehmung (100) aufsteckbar und arretierbar ist, deren T-Balken (102) in der Breite und der Höhe der Breite und der Höhe der Leiste oder des Hohlprofils (4) und deren T-Stiel (104) in der Breite dem Abstand der seitlichen Einschnürungen (90, 92) entspricht, und
- daß das andere Ende der Gewindestange (96) durch die Bohrung (94) des oberen und unteren Teiles (86, 88 oder 82, 84) hindurchsteckbar ist zur Aufnahme und zum Aufschrauben einer Mutter (106) zum Verspannen der Rohrauflager.

11. Vorrichtung nach Anspruch 10, **dadurch gekennzeichnet,** daß die zwischen den oberen und unteren Rohrauflagern (78, 80) angeordneten Rohrauflager (108) seitlich U-förmige Formstücke (110, 112) aufweisen, die auf mit entsprechenden U-förmigen Ausnehmungen (114, 116) versehene Endabschnitte (118, 119) der Leisten oder Hohlprofile (4) an geordnet sind zur Bildung einer Aufnahme für die Gewindestange (96).

12. Vorrichtung nach Anspruch 4, **dadurch gekennzeichnet,** daß die Gewindestange (24, 25) am unteren Ende ein Querstück (32, 34) aufweist, das in in den Schenkeln (40, 42) der unteren U-Profile (22) ausgebildete Querbohrungen (36, 38) einführbar ist.

## Claims

1. Apparatus for the storage and transport of pipes having several pipe supports (5) disposed one over the other,
- which comprise an oblong single-part moulding (120) having several partially cylindrical recesses (122, 124) constructed on two opposite sides as supports for several pipes
- or several short dismountable moulding parts (2) having at least one partially cylindrical recess (6, 8) constructed on two opposite sides as a support for the pipes,
- whereby the single-part moulding (120) and the moulding parts (2) are equipped with a central channel (10) extending between the recesses on both sides and at right angles to the recesses and passing through the moulding or the moulding parts
- and having a device to hold together the stack of pipe supports (14), which is held together by means of steel strip or nylon strip (16) or by means of tensioning frame (18),
**characterised** **in** **that**
- a bar or a hollow section (4) is provided, on which the moulding (120) is moulded in the injection moulding process or the moulding (120) and the moulding parts (2) respectively with the channel (10) is/are placed with positive fit,
- the channel (10) and the bar and hollow section respectively (4) have identical cross sectional shapes, whereby the internal dimensions of the channel correspond roughly to the external dimensions of the bar or of the hollow section, and
- the moulding (120) and moulding parts (2) respectively are plastic mouldings and the bar and hollow section (4) respectively are steel sections.

2. Apparatus according to Claim 1,
**characterised in that** the channel comprises a rectangular cross section and the hollow section (4) is a rectangular tube.

3. Apparatus according to Claim 1 or 2,
**characterised in that** one or more steel or nylon strips (16), which are passed through at least the uppermost and lowermost hollow section (4), are used to hold together several pipe supports (5) disposed one on top of the other.

4. Apparatus according to one of Claims 1 to 3,
**characterised in that** to hold together several pipe supports disposed one on top of the other is provided a tensioning frame (18), which comprises two U-sections (20, 22), between which the stack of pipe supports (14) is disposed and which can be braced against one another by means of two lateral, swivel-mounted threaded rods (24, 26).

5. Apparatus according to Claim 1,
**characterised in that** the hollow section is formed by two identical C-sections (48, 50) combined to form a hollow box section.

6. Apparatus according to Claim 2,
**characterised in that** at the ends on the upper and lower sides close to the longitudinal edges the rectangular tube comprises short indentations (52, 54, 56, 58), **and in that** the tube parts (60, 62) located between the indentations are upwardly and downwardly bent.

7. Apparatus according to Claim 1 or 4,
**characterised in that** the short pipe support moulding parts (2) consist of upper and lower dismountable moulded halves (64, 66) having a C-shaped cross section.

8. Apparatus according to Claim 7,
**characterised in that** one C-limb (68 of the moulded halves has short projections (70) on the face and the other C-limb (72) has pocket holes (74) complementary to the projections.

9. Apparatus according to Claim 7 or 8,
**characterised in that** the moulded halves (64, 66) have an identical construction.

10. Apparatus according to one of the preceding Claims,
**characterised in that**
- the uppermost and lowermost pipe support (78, 80) in the pipe support stack (76) at both ends comprises bars or hollow sections (4) protruding with parts (82, 84, 86, 88) from the pipe support,
- in the parts (82, 84, 86, 88) are provided lateral constrictions (90, 92) and a central vertical hole (94),
- onto the lower or upper part (82, 84 or 86, 88) can be placed a moulding (98) connected to one end of a threaded rod (96) and having a T-shaped recess (100), the T-beam (102) of which corresponds in width and height to the width and height of the bar or hollow section (4) and the T-stem (104) of which corresponds in width to the distance between the lateral constrictions (90, 92), and
- the other end of the threaded rod (96) can be placed through the hole (94) in the upper and lower part (86, 88 or 82, 84) to receive and to screw on a nut (106) to brace the pipe supports.

11. Apparatus according to Claim 10,
**characterised in that** the pipe supports (108) disposed between the upper and lower pipe supports (78, 80) comprise lateral U-shaped mouldings (110, 112), which are disposed on end sections (118, 119), provided with corresponding U-shaped recesses (114, 116), of the bars or hollow sections (4) to form a housing for the threaded rod (96).

12. Apparatus according to Claim 4,
**characterised in that** the threaded rod (24, 25) at the lower end comprises a cross-piece (32, 34) which can be inserted into cross-holes (36, 38) constructed in the limbs (40, 42) of the lower U-sections (22).

## Revendications

1. Dispositif pour le stockage et pour le transport de tubes avec plusieurs supports (5) de tubes disposés les uns au-dessus des autres,
- qui présentent respectivement une pièce façonnée (120) allongée d'une seule pièce avec plusieurs évidements (122, 124) en portion de cylindre formés sur deux faces opposées en tant que support pour plusieurs tubes,
- ou respectivement plusieurs portions (2) de pièces façonnées courtes assemblables ensemble avec au moins un évidement (6, 8) en portion de cylindre formé sur deux faces opposées en tant que support pour les tubes,
- la pièce façonnée (120) d'une seule pièce et les portions (2) de pièces façonnées étant équipées d'un canal central (10) s'étendant entre les deux évidements sur les deux faces et transversalement aux évidements, et traversant la pièce façonnée ou les portions de pièces façonnées
- et avec un dispositif pour le maintien ensemble de l'empilage (14) de supports de tubes, qui est maintenu ensemble au moyen d'un ruban d'acier ou d'un ruban de nylon (16) ou au moyen de châssis de serrage (18), caractérisé en ce que
- une baguette ou respectivement un profilé creux (4) est prévu, sur laquelle ou respectivement lequel la pièce façonnée (120) est conformée dans le processus de moulage par injection, ou la pièce façonnée (120) ou respectivement les portions (2) de pièces façonnées avec le canal (10) est ou respectivement sont emboîtée(s) à engagement positif,
- le canal (10) et la baguette ou respectivement le profilé creux (4) présentent les mêmes formes en section transversale, les dimensions intérieures du canal correspondant environ aux dimensions extérieures de la baguette ou respectivement du profilé creux et
- la pièce façonnée (120) ou respectivement les portions (2) de pièces façonnées sont des pièces moulées en matière synthétique et la baguette ou respectivement le profilé creux (4) sont des profilés en acier.

2. Dispositif selon la revendication 1,
caractérisé en ce que le canal présente une section transversale rectangulaire et le profilé creux (4) est un tube rectangulaire.

3. Dispositif selon la revendication 1 ou 2,
caractérisé en ce que un ou plusieurs rubans d'acier ou de nylon (16) servent pour le maintien ensemble de plusieurs supports de tubes (5) disposés les uns au-dessus des autres, qui sont guidés à travers au moins le profilé creux (4) supérieur ou inférieur respectivement.

4. Dispositif selon l'une des revendications 1 à 3,
caractérisé en ce que, pour le maintien ensemble de plusieurs supports de tubes disposés les uns au-dessus des autres, est prévu un châssis de serrage (18) qui présente deux profilés en U (20, 22) entre lesquels est disposé l'empilage de supports de tubes (14) et qui sont susceptibles d'être serrés l'un contre l'autre à l'aide de deux tiges filetées latérales (24, 26) disposées pivotantes.

5. Dispositif selon la revendication 1,
caractérisé en ce que le profilé creux est formé par deux profilés identiques en C (48, 50) enfoncés l'un dans l'autre en un profilé creux en forme de boîte.

6. Dispositif selon la revendication 2,
caractérisé en ce que le tube rectangulaire présente du côté des extrémités sur les faces supérieure et inférieure de courtes encoches (52, 54, 56, 58) et que les portions de tubes (60, 62) se trouvant entre les encoches sont recourbées vers le haut et vers le bas.

7. Dispositif selon la revendication 1 ou 4,
caractérisé en ce que les pièces façonnées - supports de tubes (2) courts sont constitués de demi-formes (64, 66) supérieure et inférieure à section transversale en forme de C susceptibles d'être enfoncées l'une dans l'autre.

8. Dispositif selon la revendication 7,
caractérisé en ce qu'une branche de C (68) des demi-formes présente frontalement des saillies courtes (70) et l'autre branche de C (72) des trous borgnes (74) réalisés complémentaires aux saillies.

9. Dispositif selon la revendication 7 ou 8,
caractérisé en ce que les demi-formes (64, 66) sont réalisées identiques.

10. Dispositif selon l'une des revendications précédentes,
caractérisé en ce
- que les supports de tubes (78, 80) supérieur et inférieur dans la pile (76) de supports de tubes présentent des baguettes ou des profilés creux (4) faisant saillie aux deux extrémités par des parties (82, 84, 86, 88) hors du support de tubes,
- que des étranglements latéraux (90, 92) et un alésage médian orthogonal (94) sont prévus dans les parties (82, 84, 86, 88),
- qu'une pièce façonnée (98) peut être enfoncée ou arrêtée sur la partie inférieure ou supérieure (82, 84 ou 86, 88) par un évidement (100) en forme de T dont la branche du T (102) correspond en largeur et en hauteur à la largeur et à la hauteur de la baguette ou du profilé creux (4) et dont la tige de T (104) correspond en largeur à l'écartement des étranglements latéraux (90, 92) et
- que l'autre extrémité de la tige filetée (96) peut être enfoncée à travers l'alésage (94) des parties supérieure et inférieure (86, 88 ou 82, 84) pour la réception et le vissage d'un écrou (106) pour le serrage des supports de tubes.

11. Dispositif selon la revendication 10,
caractérisé en ce que les supports de tubes (108) disposés entre les supports de tubes supérieur et inférieur (78, 80) présentent des pièces façonnées (110, 112) latéralement en forme de U qui sont disposées sur des sections d'extrémité (118, 119) des baguettes ou profilés creux (4) munis d'évidements en forme de U (114, 116) correspondants pour former un logement pour la tige filetée (96).

12. Dispositif selon la revendication 4,
caractérisé en ce que la tige filetée (24, 25) présente à l'extrémité inférieure une pièce transversale (32, 34) qui peut être introduite dans des alésages (36, 38) formés dans les ailes (40, 42) des profilés en U inférieurs (22).
